Europäisches Patentamt

European Patent Office

Office européen des brevets

(11) Veröffentlichungsnummer: **0 007 659**
**A1**

## (12) EUROPÄISCHE PATENTANMELDUNG

(21) Anmeldenummer: 79200370.9

(22) Anmeldetag: 06.07.79

(51) Int. Cl.³: **F 16 J 1/00**
**F 16 J 9/00, F 02 F 5/00**

(30) Priorität: 27.07.78 DE 2832953

(43) Veröffentlichungstag der Anmeldung:
06.02.80 Patentblatt 80/3

(84) Benannte Vertragsstaaten:
DE FR GB IT SE

(71) Anmelder: KARL SCHMIDT GmbH
Christian-Schmidt-Strasse 8/12
D-7107 Neckarsulm(DE)

(72) Erfinder: Landau, Ulrich, Ing.grad.
Krähenweg 4
D-7107 Ödheim(DE)

(72) Erfinder: Sander, Wilfried, Dipl.-Ing.
Ahornweg 11
D-7107 Neckarsulm(DE)

(72) Erfinder: Strasser, Erwin, Ing.-grad.
Pfühlstrasse 15
D-7100 Heilbronn(DE)

(74) Vertreter: Fischer, Ernst, Dr.
Reuterweg 14
D-6000 Frankfurt am Main 1(DE)

(54) Tauchkolben für Kolbenmaschinen.

(57) Bei einem Tauchkolben (1) für Kolbenmaschinen mit einem Verdichtungsring und Ölabstreifring (9,10,11) wird zum Zwecke der Erzielung eines möglichst niedrigen Ölverbrauchs bei noch ausreichender Schmierung und möglichst geringem Leckgasdurchlaß als Verdichtungsring ein Rechteckring (4) mit Innenfase (5), mit balliger Lauffläche und mit gebrochenen Lauflächenkanten verwendet. Der Ölabstreifring hat eine Höhe von 1,5 bis 3,0 mm. Die Höhe des Ringsteges (12) zwischen den beiden Ringnuten (2,3) beträgt wenigstens 5 % des Kolbendurchmessers. Das Kaltspiel zwischen dem Ringsteg (12) und dem Zylinder ist kleiner als 0,35 % des Kolbendurchmessers.

Fig. 1

EP 0 007 659 A1

- 1 -

KARL SCHMIDT GMBH                                  26.04.1979
Christian-Schmidt-Straße 8/12                      -DRQ/GKP-
7107 Neckarsulm

C.P.79/001185

## Tauchkolben für Kolbenmaschinen

Die Erfindung betrifft einen Tauchkolben für Kolbenmaschinen
mit zwei im Ringfeld angebrachten Nuten, von denen die
kolbenbodenseitige Nute mit einem Verdichtungsring und
die kolbenschaftseitige Nute mit einem Ölabstreifring
bestückt sind.

Ein solcher Tauchkolben bietet zwar Vorteile. So kann
die Bauhöhe durch Verkürzung der Ringfeldlänge herabgesetzt werden; jedoch befriedigt ein solcher Kolben
hinsichtlich Schmiermittelverbrauch und Leckgasdurchlaß
nicht ohne weiteres.

Es ist deshalb das Bestreben, durch geeignete Ausbildung
der Kolbenringe, der Ringnuten und Ringstege des Kolbens
einen möglichst niedrigen Ölverbrauch bei noch ausreichenden Schmierverhältnissen der gleitenden Teile und gleichzeitig einen möglichst geringen Leckgasdurchlaß zu erreichen.

Die Lösung dieser Aufgabe besteht in der kombinierten Anwendung folgender Maßnahmen:

(a) Der Verdichtungsring besteht aus einem Rechteckring mit Innenfase, dessen Lauffläche eine Balligkeit von 0,003 bis 0,016 mm, dessen kolbenschaftseitige Laufflächenkante einen Bruch von bis zu 0,1 $\pm$ 0,05 mm und dessen kolbenbodenseitige Laufflächenkante eine Anfasung von mindestens 0,4 $\pm$ 0,1 mm x 45° bzw. eine Verrundung mit einem Radius von mindestens 0,2 mm aufweisen.

(b) Der Ölabstreifring ist mit einem Spannelement versehen und hat eine Höhe von 1,5 bis 3,0 mm.

(c) Die Höhe des zwischen den beiden Ringnuten befindlichen Ringsteges beträgt wenigstens 5 % des Kolbendurchmessers.

(d) Das Kaltspiel zwischen dem Ringsteg und dem Zylinder beträgt weniger als 0,35 % des Kolbendurchmessers.

Der erfindungsgemäß gestaltete Verdichtungsring erfüllt neben seinen Dichtungsaufgaben auch noch die Aufgabe, den Ölverbrauch zu regulieren. Die Innenfase bewirkt, daß sich der Ring im eingebauten Zustand verdreht und die kolbenschaftseitige scharfe Laufflächenkante gegen die Zylinderlaufbahn drückt, wodurch sich eine ölabstreifende Wirkung beim Abwärtsgang des Kolbens ergibt.

Durch die starke Anfasung bzw. Verrundung der kolbenbodenseitigen Lauffflächenkante, wird ein Ölschieben des Verdichtungsrings beim Aufwärtsgang des Kolbens vermieden.
Der Ölabstreifring steht infolge seines hohen Formfüllvermögens und seiner vergleichsweise geringen Höhe in
optimalem Eingriff mit der Zylinderlaufbahn und hat daher
eine ausgezeichnete Ölabstreifwirkung. Die vergleichsweise größere Höhe und das verkleinerte Kaltspiel des
Ringsteges führen zu einer Drosselwirkung gegenüber den
Leckgasen und wirken sich vorteilhaft auf den Ölhaushalt
aus.

Zweckmäßigerweise besteht der Ölabstreifring aus einem
einteiligen Gußring oder einem mehrteiligen Stahlring.

Eine vorzugsweise Ausgestaltung der Erfindung besteht
darin, daß die Stirnfläche des Ringsteges von dessen
kolbenschaftseitiger Flanke her über einen Teil der
Ringsteghöhe radial zurückgesetzt ist.

Die Zurücksetzung des Ringsteges erstreckt sich zweckmäßigerweise höchstens über 60 % seiner Höhe.

Ferner ist es abgebracht, wenn die Zurücksetzung an der
kolbenschaftseitigen Flanke des Ringsteges wenigstens
0,35 % des Kolbendurchmessers beträgt.

In der Regel ist die Zurücksetzung der Stirnfläche des
Ringsteges durch eine im Querschnitt rechteckige Eindrehung gebildet.

Es besteht ferner die Möglichkeit, die Eindrehung im
Querschnitt konisch und an der kolbenbodenseitigen
Stirnflächenkante des Ringsteges auslaufend zu gestalten.

Durch die erfindungsgemäße Eindrehung der Stirnfläche des Ringsteges wird das Ringspaltvolumen zwischen Kolben und gegenüberliegender Zylinderlaufbahn vergrößert und damit der Gasdruck des Arbeitsmediums an der kolbenschaftseitigen Flanke des Ölabstreifringes verringert. Gleichzeitig wird durch das Ringspaltvolumen ein Entspannungsraum gebildet, in dem sich der durch die Abstreifwirkung des Ölabstreifringes aufbauende Schmieröldruck absenken kann.

Eine beispielhafte Ausführung der Erfindung ist in den nachfolgend erläuterten Zeichnungen wiedergegeben.

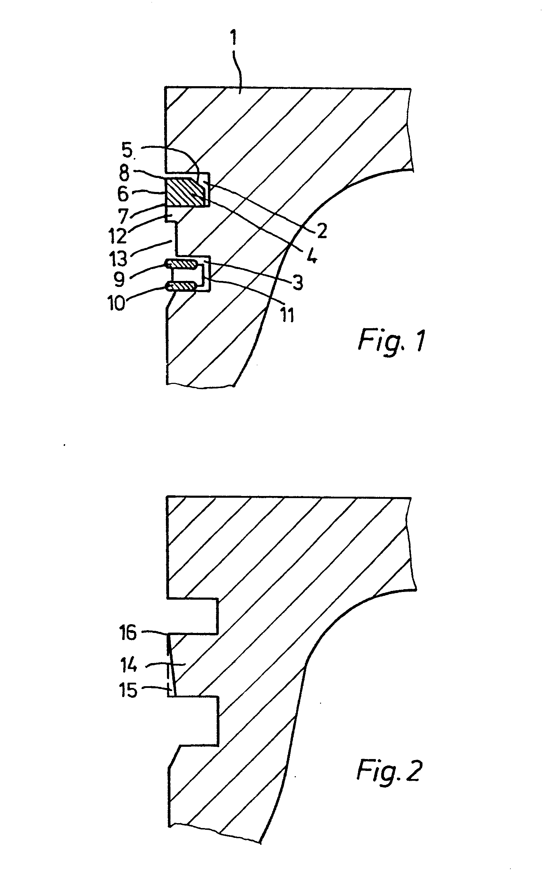

Die Fig. 1 zeigt einen ausschnittsweise dargestellten Längsschnitt durch einen Kolben 1 im Bereich der Ringpartie mit den Nuten 2, 3, wobei in der kolbenbodenseitigen Ringnute 2 ein Rechteckring 4 mit Innenfase 5 angeordnet ist, dessen Lauffläche 6 mit 0,005 mm ballig, dessen kolbenschaftseitige Lauffläckenkante 7 mit 0,1 mm gebrochen und dessen kolbenbodenseitige Lauffläckenkante 8 mit 0,3 mm angefast ist. In der kolbenschaftseitigen Ringnute 3 befindet sich ein aus zwei Ringlamellen 9, 10 und einem Spannelement 11 gebildeter Ölabstreifring mit einer Höhe von 3 mm. Der Ringsteg 12 ist durch die Eindrehung 13 auf 60 % seiner Höhe, die 5,5 % des Kolbendurchmessers beträgt, radial zurückgesetzt.

In Abweichung von Fig. 1 ist bei dem in Fig. 2 ausschnittsweise dargestellten Kolbenlängsschnitt die Stirnfläche des Ringsteges 14 mit einer im Querschnitt konischen Eindrehung 15, die an der kolbenbodenseitigen Stirnfläckenkante 16 des Ringsteges ausläuft, versehen.

Der mit der Erfindung erzielte Vorteil ist darin zu sehen, daß durch die besondere Gestaltung der Ringpartie des Kolbens und der zugehörenden Kolbenringe ein vergleichsweise niedriger Ölverbrauch bei ausreichender Schmierung und eine gute Abdichtung des Arbeitsraumes gegen den Getrieberaum erzielt werden.

PATENTANSPRÜCHE
----------------

1. Tauchkolben für Kolbenmaschinen mit zwei in der Ringpartie angebrachten Nuten, wobei in der kolbenbodenseitigen Nute ein Verdichtungsring und in der kolbenschaftseitigen Nute ein Ölabstreifring angeordnet sind, gekennzeichnet durch die Kombination folgender Merkmale:

   (a) der Verdichtungsring besteht aus einem Rechteckring (4) mit Innenfase (5), dessen Lauffläche (6) eine Balligkeit von 0,003 bis 0,013 mm, dessen kolbenschaftseitige Laufflächenkante (7) einen Bruch von bis zu 0,1 ± 0,05 mm und dessen kolbenbodenseitige Laufflächenkante (8) eine Anfasung von mindestens 0,4 ± 0,1 mm x 45° bzw. eine Verrundung mit einem Radius von mindestens 0,2 mm aufweisen,

   (b) der Ölabstreifring ist mit einem Spannelement (11) versehen und hat eine Höhe von 1,5 bis 3,0 mm,

   (c) die Höhe des zwischen den beiden Ringnuten (2, 3) befindlichen Ringsteges (12) beträgt wenigstens 5 % des Kolbendurchmessers,

   (d) das Kaltspiel zwischen dem Ringsteg (12) und dem Zylinder beträgt weniger als 0,35 % des Kolbendurchmessers.

2. Tauchkolben nach Anspruch 1, dadurch gekennzeichnet, daß der Ölabstreifring aus einem Gußring oder einem mehrteiligen Stahlring (9, 10, 11) besteht.

3. Tauchkolben nach Anspruch 1 und/oder 2, <u>dadurch gekenn-zeichnet</u>, daß die Stirnfläche des Ringsteges (12) von dessen kolbenschaftseitiger Flanke her über einen Teil der Ringsteghöhe radial zurückgesetzt ist.

4. Tauchkolben nach Anspruch 2, <u>dadurch gekennzeichnet</u>, daß die Stirnfläche des Ringsteges (12) von dessen kolbenschaftseitiger Flanke her über höchstens 60 % der Ringsteghöhe zurückgesetzt ist.

5. Tauchkolben nach den Ansprüchen 2 und 3, <u>dadurch gekenn-zeichnet</u>, daß die Stirnfläche des Ringsteges (12) an dessen kolbenschaftseitiger Flanke um wenigstens 0,35 % des Kolbendurchmessers zurückgesetzt ist.

6. Tauchkolben nach den Ansprüchen 3 bis 5, <u>dadurch gekenn-zeichnet</u>, daß die Zurücksetzung durch eine im Querschnitt rechteckige Eindrehung (13) gebildet ist.

7. Tauchkolben nach Anspruch 1 und/oder 2, <u>dadurch gekenn-zeichnet</u>, daß die Stirnfläche des Ringsteges (14) von dessen kolbenschaftseitiger Flanke durch eine im Querschnitt konische Eindrehung (15), die an der kolbenbodenseitigen Stirnflächenkante (16) des Ringsteges (14) ausläuft, radial zurückgesetzt ist.

Fig. 1

Fig. 2

**Europäisches Patentamt**

# EUROPÄISCHER RECHERCHENBERICHT

Nummer der Anmeldung

EP 79 200 370.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 550 317 (DAIMLER-BENZ) <br> * gesamte Druckschrift * <br> -- | 1 |
| | DE - B - 2 132 312 (TRW INC.) <br> * gesamte Druckschrift * <br> -- | 1 |
| | US - A - 3 522 949 (A. WELLS) <br> * gesamte Druckschrift * <br> -- | 1 |
| | US - A - 4 099 730 (K.J. NISPER) <br> * Spalte 1, Zeile 65 und folgende * <br> -- | 2 |
| | US - A - 2 459 395 (D.M. SMITH) <br> * Fig. 3 * <br> -- | 1 |
| | US - A - 2 798 779 (A.E. SWARTZ et al.) <br> * Fig. 2 und 3, Position 3 * <br> -- | 1 |
| | US - A - 2 591 920 (R.H. COLVIN) <br> * Fig. 3 * <br> -- | 1 |
| | DE - B - 1 800 264 (BAYERISCHE MOTOREN-WERKE) <br> * Fig. 1, Position 2' * <br> -- | 4 |
| | DE - B - P5605 XII/47f (J.A. PRESTWICH et al.) <br> * Fig. 1, Position 10; Fig. 2, 3, Position 12 * <br> ---- | 4 |

**KLASSIFIKATION DER ANMELDUNG (Int.Cl.³)**

F 16 J 1/00
F 16 J 9/00
F 02 F 5/00

**RECHERCHIERTE SACHGEBIETE (Int. Cl.³)**

F 02 F 5/00
F 16 J 1/00
F 16 J 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 30-10-1979 | HAUGG |

EPA form 1503.1  06.78